# EUROPÄISCHE PATENTANMELDUNG

(11) **EP 2 246 171 A2**
(43) Veröffentlichungstag der Anmeldung: **03.11.2010**
(21) Anmeldenummer: 10003281.2
(22) Anmeldetag: 26.03.2010
(51) Int. Cl.: B29C 44/08, B29C 44/44

(54) **Verfahren zur Herstellung eines Verkleidungsteils für einen Innenraum eines Fahrzeugs**

(30) Priorität: 24.04.2009 DE 102009018887
(71) Anmelder: Bayerische Motoren Werke Aktiengesellschaft, 80809 München (DE)
(72) Erfinder: Lehner, Martin, 84030 Ergolding (DE); Strasser, Peter, 84032 Altdorf (DE); Krull, Sebastian, 85465 Langenpreising (DE)

(57) **Zusammenfassung**

Verfahren zur Herstellung eines Verkleidungsteils für einen Innenraum eines Fahrzeugs, gekennzeichnet durch folgende Schritte:
- Aufsprühen einer Lackschicht auf ein erstes Formelement eines Werkzeugs,
- Aufsprühen einer ersten Kunststoffschicht auf eine dem ersten Formelement abgewandte Seite der Lackschicht,
- Schließen des Werkzeugs, indem ein zweites Formelement an das erste Formelement herangefahren wird, wobei zwischen der ersten Kunststoffschicht und dem zweiten Formelement ein Formhohlraum verbleibt,
- Befüllen des Formhohlraums mit Kunststoffpartikein,
- Verbinden der Kunststoffpartikel untereinander und mit der ersten Kunststoffschicht durch Erhitzen der Kunststoffpartikel zu einer zweiten Kunststoffschicht.

## Beschreibung

### Verfahren zur Herstellung eines Verkleidungsteils für einen Innenraum eines Fahrzeugs

Die vorliegende Erfindung betrifft ein Verfahren zur Herstellung eines Verkleidungsteils für einen Innenraum eines Fahrzeugs gemäß dem Oberbegriff des Patentanspruches 1.

Aus der älteren, nicht vorveröffentlichten deutschen Patentanmeldung DE 10 2007 033 374 ist ein Verfahren zum Herstellen einer elastischen Kunststoff-Formhaut für eine Instrumententafel eines Fahrzeugs bekannt, wobei die Formhaut durch Aufsprühen eines aufschäumenden Kunststoffs auf eine Form hergestellt wird. Eine derartige elastische "Sprühhaut" und ein im Vergleich dazu relativ steifer Träger werden durch Hinterschäumen mit einem Polyurethan-Halbhartschaum zu einer Instrumententafelabdeckung miteinander verbunden. Im Ergebnis erhält man einen Dreischichtaufbau mit einer durch die Sprühhaut gebildeten optisch und haptisch hochwertigen Oberfläche, einer weichen Zwischenschicht, welche für eine angenehme Haptik erforderlich ist, und einem darunter liegenden steifen Trägerteil.

Die Herstellung eines derartigen "Verkleidungsteils" ist mit einem hohen Investitions- und Logistikaufwand verbunden, da für die Herstellung der Sprühhaut, des Trägerteils und der elastischen Zwischenschicht drei separate Prozesse erforderlich sind. Für das Hinterschäumen müssen die zuvor in einem separaten Prozess gefertigte Sprühhaut und das Trägerteil in ein Schäumwerkzeug eingebracht werden, was mit einem relativ hohen Handhabungs- aufwand verbunden ist. Desweiteren weist ein derartiges Verkleidungsteil ein relativ hohes Gewicht auf und ist nur teilweise recyclebar.

Aufgabe der Erfindung ist es, ein Verfahren zur Herstellung eines Verkleidungsteils anzugeben, das kostengünstig ist und das die Herstellung eines qualitativ hochwertigen Verkleidungsteils ermöglicht, welches zudem ein geringes Gewicht aufweist.

Diese Aufgabe wird durch die Merkmale des Patentanspruches gelöst. Vorteilhafte Ausgestaltungen und Weiterbildungen der Erfindung sind den Unteransprüchen zu entnehmen.

Ausgangspunkt der Erfindung ist die Idee, ein Verkleidungsteil, das eine Trägerschicht, eine elastische Zwischenschicht und eine optisch und haptisch hochwertig anmutende Dekorschicht aufweist, in mehreren Arbeitsgängen in ein und demselben Werkzeug herzustellen.

Das verwendete Werkzeug weist ein Werkzeugunterteil und ein Werkzeugoberteil auf, die in folgenden unabhängig von ihrer geometrischen Lage als erstes bzw. zweites Formelement bezeichnet werden. In einem ersten Fertigungsschritt wird eine Formfläche des ersten Formelements mit einem Trennmittel besprüht. Anschließend wird darauf eine Lackschicht aufgesprüht. Das Trennmittel soll sicherstellen, dass die Lackschicht nicht an der Formfläche des ersten Formelements festklebt, sondern abgelöst werden kann, ohne dass die Lackschicht beschädigt wird.

Die Formfläche des ersten Formelements kann eine Strukturierung aufweisen, die z.B. der Narbung eines Naturleders nachgebildet sein kann. Die Strukturierung zeichnet sich entsprechend in der Lackschicht ab und verleiht dem herzustellenden Verkleidungsteils eine optisch und haptisch hochwertig anmutende Oberfläche. Die Lackschicht kann beispielsweise eine Dicke im Bereich zwischen 30 und 70 µm aufweisen, vorzugsweise eine Dicke Im Bereich zwischen 50 und 70 µm.

Es sei ausdrücklich darauf hingewiesen, dass das Auftragen einer Trennmittelschicht und einer Lackschicht auf die Trennmittelschicht nicht unbedingt erforderlich ist.

In einem weiteren Fertigungsschritt wird auf die dem ersten Formelement abgewandte Seite der Lackschicht eine erste Kunststoffschicht aufgesprüht. Wird auf die Trennmittelschicht und/oder auf die Lackschicht verzichtet, so kann die erste Kunststoffschicht auch unmittelbar auf das erste Formelement aufgebracht werden.

Als Material zur Herstellung der ersten Kunststoffschicht kann beispielsweise ein Polyurethanschaum verwendet werden. Die Kunststoffschicht kann beispielsweise in einer Dicke zwischen 3 und 5 mm appliziert werden. Zur Erzielung einer hochwertig anmutenden Haptik kann die Dichte der Kunststoffschicht beispielsweise im Bereich zwischen 0,4 und 0,6 g/cm³ liegen. Die Härte IRHD der ersten Kunststoffschicht kann beispielsweise 50 betragen.

Nach dem Applizieren der ersten Kunststoffschicht kann eine gewisse Ausreaktionszeit vorgesehen sein, bevor mit weiteren Fertigungsschritten fortgefahren wird. Vorzugsweise lässt man die erste Kunststoffschicht nur solange ausreagieren, dass die dem ersten Formelement abgewandte Seite der ersten Kunststoffschicht noch "klebrig" ist.

Nach dem Applizieren und gegebenenfalls Ausreagieren der ersten Kunststoffschicht wird das Werkzeug geschlossen, indem ein zweites Formelement an das erste Formelement herangefahren wird. Zwischen der ersten Kunststoffschicht und einer Formfläche des zweiten Formelements verbleibt dabei ein Formhohlraum.

Der Formhohlraum wird in einem weiteren Fertigungsschritt mit Kunststoffpartikeln, die z.B. in Granulatform vorliegen können, befüllt. Das Granulat kann in Kugelform vorliegen. Die Kügelchen können z.B. eine Dicke zwischen 2mm und 3mm haben.

Gegebenenfalls kann vor dem Befüllen des Formhohlraums mit Kunststoffpartikeln die dem ersten Formelement abgewandte Seite der ersten Kunststoffschicht noch mit einem Haftvermittler ("Primer") oder mit einem Klebstoff versehen werden.

Bei den zum Befüllen des Hohlraums verwendeten Kunststoffpartikeln kann es sich beispielsweise um expandiertes Polypropylen handeln, insbesondere um expandierte Polypropylenschaumpartikel. Durch Erhitzen der Kunststoffpartikel werden die Kunststoffpartikel untereinander und mit der ersten Kunststoffschicht zu einer zweiten Kunststoffschicht verbunden. Die zweite Kunststoffschicht kann beispielsweise eine Dicke im Bereich zwischen 10 und 50 mm und eine Dichte im Bereich zwischen 0,05 und 0,15 g/cm³ aufweisen.

Das Befüllen des Formhohlraums kann über einen Befüllkanal oder mehrere im zweiten Formelement vorgesehene "Befüllkanäle" erfolgen. Um eine möglichst vollständige Befüllung des Formhohlraums zu erreichen, können die Kunststoffpartikel mittels Druckluft in den Formhohlraum eingeblasen werden und durch den Luftdruck zumindest etwas "verdichtet" werden.

Das Erhitzen der Kunststoffpartikel kann beispielsweise durch Einblasen von Heißdampf, insbesondere von Wasserdampf, erfolgen. Durch die damit einhergehende Energiezufuhr werden die einzelnen Kunststoffpartikel oberflächlich angeschmolzen und verbinden sich hierdurch zur zweiten Kunststoffschicht. Die Kunststoffpartikel werden also durch Energiezufuhr zu einer zweiten Kunststoffschicht "gesintert".

Zusammenfassend werden mit der Erfindung folgende Vorteile erreicht:
- Kostenvorteil durch Herstellung eines dreischichtigen Verkleidungsteils in einem einzigen Werkzeug.
- Deutlicher Gewichtsvorteil gegenüber Verkleidungsteilen, die in herkömmlichen Herstellverfahren hergestellt werden.
- Optisch und haptisch hochwertige Dekorschicht.
- Die Dicke der zweiten Kunststoffschicht kann lokal variiert werden, was eine Anpassung an die Geometrie von Instrumententafelkomponenten ermöglicht, die unterhalb der Instrumententafelverkleidung angeordnet sind (Dickenausgleich).
- Instrumententafelkomponenten, wie z.B. Luftkanäle einer Fahrzeugklimaanlage können ganz oder teilweise in die zweite Kunststoffschicht integriert werden.
- Mit den erfindungsgemäß vorgeschlagenen Materialien werden gute Crash-Eigenschaften erreicht, welche insbesondere die Gefahr von Kopfverletzungen minimieren.
- Zusätzlich verbessert sich die Innenraumakustik und das Innenraumklima, da sich die Oberfläche weniger stark aufheizt als bei herkömmlichen Fahrzeugen.

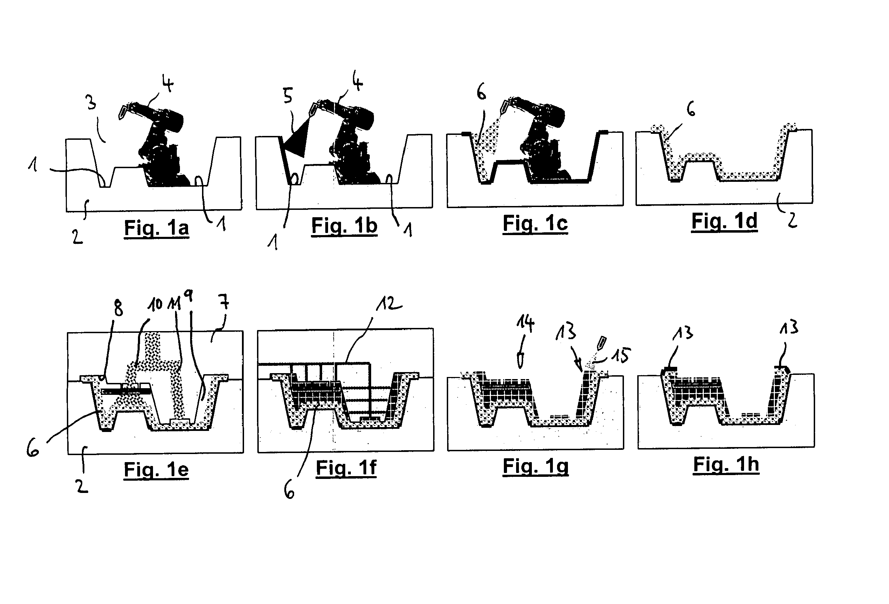

Im Folgenden wird die Erfindung im Zusammenhang mit der Zeichnung näher erläutert. Die Figuren 1a - 1h beschreiben die einzelnen Fertigungsschritte zur Herstellung eines Verkleidungsteils.

In einem ersten Schritt wird eine Formfläche 1 eines ersten Formelements bzw. eines ersten Werkzeugteils 2 mit einem Trennmittel 3 besprüht. Das Besprühen kann automatisch gesteuert durch einen Sprühroboter 4 erfolgen (vgl. Figur 1a).

Nach dem Aufbringen des Trennmittels wird die mit dem Trennmittel versehene Formfläche 1 mit einem "Dekorlack" 5 besprüht. Das Besprühen kann ebenfalls automatisch gesteuert durch den Sprühroboter 4 erfolgen. Die Lackschicht kann beispielsweise eine Dicke im Bereich zwischen 50 und 70 µm aufweisen. Zur Erzielung einer optisch ansprechenden Oberfläche kann die Formfläche 1 des ersten Formelements 2 mit einer Strukturierung, z.B. mit einer holzartigen Maserung, einer lederartigen Narbung o.ä. versehen sein, die sich entsprechend in der Lackschicht abzeichnet.

In einem weiteren in Figur 1c dargestellten Fertigungsschritt wird auf die dem Formelement 2 abgewandte Seite der Lackschicht eine erste Kunststoffschicht 6 aufgesprüht, bei der es sich beispielsweise um eine Polyurethanschaumschicht handeln kann. Die Polyurethanschaumschicht 6 kann beispielsweise eine Dicke im Bereich zwischen 3 und 5 mm und eine Dichte im Bereich zwischen 0,4 und 0,6 g/cm³ aufweisen.

In einem in Figur 1d dargestellten Zwischenschritt lässt man die erste Kunststoffschicht 6 eine gewisse Zeit lang ausreagieren. Vorzugsweise ist die Reaktionszeit so bemessen, dass die dem ersten Formelement 2 abgewandte Seite der ersten Kunststoffschicht gerade noch klebrig ist.

In dem in Figur 1e dargestellten Fertigungsschritt wird das Werkzeug geschlossen, indem ein zweites Formelement 7 an das erste Formelement 2 herangefahren wird. Das zweite Formelement 7 weist eine zweite Formfläche 8 auf, die mit der Kunststoffschicht 6 einen Formhohlraum 9 ausbildet.

Wie aus Figur 1e ersichtlich ist, sind in dem zweiten Formelement 7 Befüllkanäle 10, 11 vorgesehen.

Bei dem in Figur 1e gezeigten Ausführungsbeispiel wird mittels des zweiten Formelements 7 ein "Insert" bzw. ein Einsatzelement, bei dem es sich z.B. um eine Schraubplatte, einen Flansch o.ä. handeln kann, in den Formhohlraum 9 eingebracht.

Über die Befüllkanäle 10, 11 werden mittels Druckluft Kunststoffpartikel, bei denen es sich z.B. um expandierte Polypropylenschaumpartikel handeln kann, in den Formhohlraum 9 eingeblasen, bis dieser vollständig mit den Kunststoffpartikeln befüllt ist. Das Insert wird also allseitig von den Kunststoffpartikeln umgeben und gehalten.

In dem in Figur 1f gezeigten Verfahrensschritt wird über ein verzweigtes in dem zweiten Formelement 7 vorgesehenes Kanalsystem 12 Heißdampf in den Formhohlraum 9 eingeblasen. Durch den Heißdampf werden die Kunststoffpartikel erhitzt und oberflächlich angeschmolzen, was zu einem Art "Sintervorgang" führt. Im Ergebnis verschmelzen die Kunststoffpartikel untereinander und mit der "Rückseite" der ersten Kunststoffschicht 6.

In dem in Figur 1g dargestellten Fertigungsschritt wird auf Randbereiche 13 des "Verkleidungsteils" 14 Kleber 15 aufgetragen. Die Randbereiche 13 können anschließend umgebogen und verklebt werden.

## Patentansprüche

1. Verfahren zur Herstellung eines Verkleidungsteils (14) für einen Innenraum eines Fahrzeugs, **gekennzeichnet durch** folgende Schritte:
- Ausbringen einer ersten Kunststoffschicht (6) in einem Werkzeug (1, 2), das ein erstes Formelement (1) aufweist,
- Schließen des Werkzeugs, indem ein zweites Formelement (7), an das erste Formelement (2) herangefahren wird, wobei zwischen der ersten Kunststoffschicht (6) und dem zweiten Formelement (7) ein Formhohlraum (9) verbleibt,
- Befüllen des Formhohlraums (9) mit Kunststoffpartikeln,
- Verbinden der Kunststoffpartikel untereinander und mit der ersten Kunststoffschicht **durch** Erhitzen der Kunststoffpartikel zu einer zweiten Kunststoffschicht.

2. Verfahren nach Anspruch 1,
**dadurch gekennzeichnet, dass**
vor dem Ausbringen der ersten Kunststoffschicht (6) eine Lackschicht (3) auf ein erstes Formelement (1, 2) des Werkzeugs aufgesprüht wird und dass die erste Kunststoffschicht (6) auf eine dem ersten Formelement (1, 2) abgewandte Seite der Lackschicht (3) aufgesprüht wird.

3. Verfahren nach Anspruch 1 oder 2,
dass die Dicke der Lackschicht im Bereich zwischen 30 und 70 µm liegt.

4. Verfahren nach Anspruch 1 oder 2,
**dadurch gekennzeichnet, dass** die erste Kunststoffschicht (6) eine Polyurethanschaumschicht ist.

5. Verfahren nach einem der Ansprüche 1 bis 4,
**dadurch gekennzeichnet, dass** die erste Kunststoffschicht (6) eine Dicke im Bereich zwischen 3 und 5 mm aufweist.

6. Verfahren nach einem der Ansprüche 1 bis 5,
**dadurch gekennzeichnet, dass** die erste Kunststoffschicht (6) eine Dichte im Bereich zwischen 0,4 und 0,6 g/cm³ aufweist.

7. Verfahren nach einem der Ansprüche 1 bis 6,
**dadurch gekennzeichnet, dass** man die erste Kunststoffschicht (6) vor dem Befüllen des Formhohlraums (9) eine gewisse Zeitlang ausreagieren lässt.

8. Verfahren nach Anspruch 7,
**dadurch gekennzeichnet, dass** man die erste Kunststoffschicht (6) nur solange ausreagieren lässt, dass eine dem ersten Formelement (2) abgewandte Seite der ersten Kunststoffschicht (6) noch klebrig ist.

9. Verfahren nach einem der Ansprüche 1 bis 8,
**dadurch gekennzeichnet, dass** vor dem Befüllen des Formhohlraums (9) auf die dem ersten Formelement (2) abgewandte Seite der ersten Kunststoffschicht (6) ein Haftvermittler aufgebracht wird.

10. Verfahren nach einem der Ansprüche 1 bis 10,
**dadurch gekennzeichnet, dass** es sich bei der zweiten Kunststoffschicht um eine Schicht aus expandiertem Polypropylen handelt, insbesondere um eine aus expandierten Polypropylenschaumpartikeln hergestellte Kunststoffschicht.

11. Verfahren nach einem der Ansprüche 1 bis 10,
**dadurch gekennzeichnet, dass** die zweite Kunststoffschicht eine Dicke im Bereich zwischen 10 und 50 mm aufweist.

12. Verfahren nach einem der Ansprüche 1 bis 11,
**dadurch gekennzeichnet, dass** die zweite Kunststoffschicht eine Dichte im Bereich zwischen 0,05 und 0,15 g/cm³ aufweist.

13. Verfahren nach einem der Ansprüche 1 bis 12,
**dadurch gekennzeichnet, dass** das Befüllen des Formhohlraums (9) über mindestens einen im zweiten Formelement (7) vorgesehenen Befüllkanal (10, 11) erfolgt.

14. Verfahren nach einem der Ansprüche 1 bis 13,
**dadurch gekennzeichnet, dass** das Befüllen des Formhohlraums (9) durch Einblasen der Kunststoffpartikel mittels Druckluft erfolgt.

15. Verfahren nach einem der Ansprüche 1 bis 14,
**dadurch gekennzeichnet, dass** das Erhitzen der Kunststoffpartikel durch Einblasen von Heißdampf, insbesondere von Wasserdampf, in den Formhohlraum (9) erfolgt.

16. Verfahren nach einem der Ansprüche 1 bis 15,
**dadurch gekennzeichnet, dass** das Verbinden der Kunststoffpartikel untereinander und mit der ersten Kunststoffschicht (6) durch oberflächliches Anschmelzen bzw. Sintern der Kunststoffpartikel erfolgt.
